# EUROPEAN PATENT SPECIFICATION

(11) **EP 0 697 946 B1**
(45) Date of publication and mention of the grant of the patent: **03.09.1997**
(21) Application number: 94915807.5
(22) Date of filing: 15.04.1994
(51) Int. Cl.: B29B 15/10, C08J 5/06, C08J 5/24

(54) **IMPROVED PROCESS FOR RESIN TRANSFER MOLDING**
VERBESSERTES VERFAHREN ZUM TRANSFER-SPRITZEN VON KUNSTHARZ (RTM)
PROCEDE PERFECTIONNE POUR LE MOULAGE PAR INJECTION BASSE PRESSION DE RESINE

(30) Priority: 07.05.1993 US 59153; 15.06.1993 US 77466
(43) Date of publication of application: 28.02.1996
(73) Proprietor: THE DOW CHEMICAL COMPANY, Midland, Michigan 48640 (US)
(72) Inventor: WHITE, Warren, D., Lake Jackson, TX 77566 (US); COOK, Phil, H., Hong Kong (HK); WAI, Martin, Cheshire, CT 06410 (US); DAVIS, William, Lake Jackson, TX 77566 (US)
(74) Representative: Casalonga, Axel
(86) International application number: US9404167
(87) International publication number: WO9426493

(56) References cited:
- EP-A- 0 139 605
- EP-A- 0 475 883
- US-A- 3 450 594
- US-A- 3 755 061
- US-A- 4 664 768
- DATABASE WPI Derwent Publications Ltd., London, GB; AN 93-088340[11] & JP,A,5 031 839 (TONEN CORP.) 9 February 1993 see abstract

## Description

The present invention relates to resin transfer molding processes and preforms useful in those processes.

Resin transfer molding processes are used to make fiber reinforced composite materials. Layers of reinforcing material are loaded into a mold, and a thermosetting resin is injected into the mold and cured using accepted procedures to provide a finished composite piece.

It is difficult and time consuming to load individual layers of fiber into the mold. Therefore, a thermoplastic, thermosetting resin is sometimes used as a "tackifier" to stiffen the reinforcing materials and hold them together before the molding process begins. See Heck et al., U.S. Patent 4,992,228 (February 12, 1991) and Flonc et al., U.S. Patent 5,080,851 (January 14, 1992), the individual fiber plies are sprinkled with a solid powder of the tackifier. The individual ply, with the powder applied, is heated to above the melting point of the tackifier in order to fuse the tackifier to the surface of the substrate.

In a separate operation, the individual plies can be stacked together, heated and pressed to fuse the plies together, and then cooled to solidify the tackifier leaving a preform. The preform can be placed into the mold and used in an ordinary resin transfer molding process thereafter.

The known processes, e.g. EP-A-0 475 883, have an unrecognized drawback. The tackifier is seldom completely soluble in the matrix resin used in the resin transfer molding process. The time needed for the matrix resin to dissolve the tackifier is often much longer than the time needed to complete the resin transfer molding process. Therefore, as curable resin is pumped into the mold, it transports the tackifier preferentially to one end of the molded product. The resulting composite product contains a matrix resin whose chemical composition near the exits to the mold is different from the chemical composition near the injection points in the mold. The areas containing high concentrations of tackifier frequently have poorer physical properties (such as glass-transition temperature) and/or poorer mechanical properties (such as compression or short-beam shear strength) than the areas that contain lower proportions of tackifier.

What is needed is an improved process which gives a substantially even dispersion of tackifier throughout the composite product.

One aspect of the present invention is a process to make a matrix composite comprising the steps of:
(1) contacting a reinforcing substrate with a thermoplastic-like tackifier at a temperature above the glass-transition temperature of the tackifier, so that the tackifier adheres to the substrate, whereby a preform is made; and
(2) contacting one or more preforms with a matrix resin, which is a second curable resin or resin composition capable of co-curing with the tackifier, under conditions such that the tackifier and matrix resin are cured, whereby a composite is formed,
characterized in that the tackifier is soluble in the matrix resin or is essentially identical to the matrix resin.

(The term "thermoplastic-like" is a term of art referring to a solid, thermosetting resin that exhibits thermoplastic properties, such as a glass-transition temperature and/or a melting point, so that the resin is thermoformable. The glass-transition temperature or melting point should be low enough so that the thermoplastic-like resin cures slowly or not at all, so that the resin can be thermoformed without completely curing the resin.)

The processes of the present invention can be used to make reinforced matrix composites. The composites are useful as structural materials.

The present invention uses a reinforcing substrate. Suitable reinforcements are well-known and familiar to persons of ordinary skill in the art. See, for example, Kirk-Othmer Encyclopedia of Chemical Technology-Supplement, Composites, High Performance, at 260-281 (J. Wiley & Sons, 1984), which is incorporated herein by reference. The substrate usually contains fibers, such as quartz, aramid, boron, glass, carbon, or gel-spun polyethylene fibers. The fibers can be unidirectional or multidirectional. They may be in the form of woven or nonwoven mats or in the form of random short fibers. Preferably, the substrate is in the form of a woven or nonwoven fibrous material.

The substrate is contacted with a thermoplastic-like tackifier under conditions such that the tackifier partially melts and adheres to the substrate. The tackifier contains a thermoplastic-like curable resin or resin composition. Curable resins that are ordinarily liquid or semi-solid at room temperature can be converted to thermoplastic-like solid resins either by advancing the molecular weight of the resin (such as an advanced epoxy resin) or by partially curing the resin (such as by partially polymerizing a bismaleimide resin) or both.

The resins usually fall into two groups: (1) resins that can completely cure by reacting with themselves without the need for a separate curing agent and (2) resins which require a curing agent for ordinary curing. (Each group contains some species that also require the presence of an initiator, promoter or catalyst for optimal curing.)

Examples of suitable resins which can cure or react with themselves include: polyimide and particularly bismaleimide resins, poly(cyanate ester) resins, polyester and vinyl ester resins (with suitable initiators and promoters) and benzocyclobutene resins. The most preferred example is bismaleimide resin. Examples of suitable polyimide and bismaleimide resins are described in Stenzenberger, "Recent Advances in Thermosetting Polyimides", 20 British Polymer Journal 383-396 (1988).

Examples of suitable resins that can react with themselves are commercially available. Examples of preferred bismaleimide resins include 4,4'-bismaleimido-diphenylmethane or 1,4-bismaleimido-2-methylbenzene or mixtures thereof, either alone or in mixtures with unsaturated monomers such as O,O'-diallyl-bisphenol A.

Examples of suitable resins that cure by reaction with a curing agent include: (a) a mix of epoxy resin and a known curing agent; (b) a mix of polyisocyanate and polyol suitable to make polyurethanes (such as SPECTRIM™ MM310 resin); and (c) epoxy-cyanate resin systems (such as E-905L resin from BP Chemicals). The mixture of resin and hardener preferably contains an epoxy resin and suitable curing agent.

The epoxy resin is preferably the glycidyl ether of a polyhydric phenol, such as biphenol, bisphenol A, tetrabromobisphenol A, a novolac resin (such as bicyclopentadienyl epoxy novolac), or bis-(hydroxyphenyl)fluorene resin. It preferably has an epoxy equivalent weight (EEW) of between 150 and 800. For instance, the resin may optionally be TACTIX® 123, DER® 383 or DER® 542 epoxy resin from The Dow Chemical Company or PR-500 resin from 3M. In advanced thermoplastic-like resins, the EEW is preferably 675 to 750. (Brominated resins, and other resins that contain a significant amount of heavy substituents, may have EEW that is 50 to 100 or more higher than normal due to the presence of the heavier substituents.)

The curing agent for an epoxy resin is preferably an amine, amide, sulfimide, sulfamide, polyamine, polyamide, polymercaptan, polyphenol, polyacid, polyanhydride or a complex (such as a boron trifluoride:amine complex). For instance, the curing agent may optionally be MILLAMINE™ 5260 curing agent. It is more preferably an amine or amide compound, such as dicyanamide. A multistage curing agent, such as sulfanilamide, may also be used for making partially cured resin compositions. The multistage curing agent may be a single compound or a mixture of compounds that contain two or more reactive moieties that react with the epoxy resin to cure at different temperatures. The equivalent ratio of curing agent to resin is preferably between 0.5:1 and 1.5:1, and more preferably between 0.8:1 and 1.2:1, unless a non-stoichiometric reaction of resin and tackifier is desired.

The mixture of resin and curing agent may also contain a suitable curing catalyst, such as a primary aliphatic polyamine or a tertiary amine, phenol-containing tertiary amines or substituted imidazoles. The concentration of catalyst is preferably between 0 and 2 parts catalyst per 100 parts resin, by weight (phr), more preferably between 0.05 and 0.5 phr, and most preferably between 0.08 and 0.2 phr. Suitable catalysts, resins and hardeners are commercially available.

Preferably, the glass-transition temperature of the tackifier is low enough that the preform can be laminated and/or shaped without over-curing the tackifier. An epoxy tackifier preferably has a glass-transition temperature of no more than about 150°C, more preferably no more than about 130°C, and most preferably no more than about 100°C. A bismaleimide tackifier preferably has a glass transition temperature of no more than about 180°C, and more preferably no more than about 120°C. On the other hand, the glass transition temperature is preferably high enough so that the preform can be handled and stored at room temperature. The glass-transition temperature is preferably at least about 40°C, and more preferably at least about 60°C. (Glass-transition temperature can be conveniently measured by differential scanning calorimetry.)

A tackifier that is liquid at room temperature may be advanced to higher molecular weight by known methods in order to create a solid thermoplastic resin. For instance, epoxy resins that are derived from bisphenols may be reacted with more bisphenol to advance molecular weight, according to known procedures. Solid advanced epoxy resins are commercially available and well known in the art. The preferred EEW of the advanced resin is previously described.

Furthermore, a tackifier that is ordinarily liquid may be partially cured to increase its molecular weight, so that it is thermoplastic-like. The partial curing may be accomplished in situ on the substrate, but is preferably done separately before the tackifier is applied to the substrate. It should be cured enough so that it solidifies at room temperature to adhere to the substrate and hold the substrate in the desired shape and position. On the other hand, the curing should not be complete. The partially cured tackifier should still be thermoformable and should still be capable of reacting with the matrix resin.

Curing can be halted at the desired level of curing by at least three different methods. First, a resin composition that contains both resin and a curing agent may contain less than a stoichiometric quantity of curing agent, so that only an incomplete cure is possible. The precise quantities of resin and curing agent vary depending upon the resin and curing agent selected, but can readily be determined by persons of ordinary skill in the art. For instance, when the resin is epoxy resin, and the curing agent is sulfanilamide, then the molar ratio of epoxy moieties to curing sites is preferably between 0.5:1 and 0.8:1 or 1.1:1 and 1.5:1.

Second, when resin composition contains both resin and a curing agent, the curing agent may be a multistage curing agent. The resin and curing agent are cured at a temperature that will only cause curing on some of the curing agent's active sites. In the second step, the composition may be cured at a higher temperature to cause curing at all of the active sites and completely cure the composition.

Third, even when the tackifier is self-curing or contains stoichiometric ratios of resin and hardener, the time and temperature of the partial cure may be selected to provide the desired level of curing. Again, the optimal time and temperature will vary depending upon the tackifier and the presence or absence of any catalyst within the tackifier. Persons of ordinary skill in the art can readily determine the optimum time and temperature without undue experimentation. For instance, when the tackifier contains a mixture of 4,4'-bis-MDA bismaleimide resin, O,O'-diallyl-bisphenol A and higher molecular weight BMI compounds, it is preferably reacted for between 80 and 200 minutes at a temperature between 110°C and 150°C.

The tackifier is contacted with a reinforcing substrate at a temperature above its glass-transition temperature. The tackifier should be applied to the substrate in a quantity great enough to hold the fibers in the desired shape and position but small enough to leave the resulting preform porous, so that later the matrix resin can infuse throughout the substrate and eliminate any significant voids. The quantity of tackifier is preferably at least about 0.25 weight percent of the substrate, more preferably at least about 1 weight percent, and most preferably at least about 3 weight percent. The quantity of tackifier is preferably no more than about 15 weight percent of the substrate, more preferably no more than about 8 weight percent, and most preferably no more that about 5 weight percent.

The tackifier may be applied by known methods for powders, such as hand-sprinkling, spraying or electrostatic application. It is preferably applied substantially evenly across the substrate.

The temperature during or after application is raised high enough so that the tackifier becomes plastic and adheres to the fibers. The temperature should be low enough so that the tackifier does not completely cure if a hardener is present. It should remain thermoplastic, capable of later dissolving in the matrix resin and capable of co-curing with the matrix resin. A temperature within the glass-transition temperatures that were previously described is preferable.

Some partially cured tackifiers may continue to cure slowly at room temperature. Therefore, the preform is preferably used in the next step of the reaction before the tackifier cures significantly more. The tackifier is preferably shelf-stable for at least about two weeks and more preferably for at least about a month.

Individual plies of preform may optionally be shaped or laminated together before the matrix resin is applied and cured. For instance, multiple plies may be pressed together at a temperature above the glass-transition temperature of the tackifier which does not completely cure the tackifier (such as a temperature within the glass-transition temperatures previously described). Likewise, individual preforms or laminates may be molded or shaped at a temperature above the glass-temperature of the tackifier using pressure, such as 10 psig to 500 psig (170 kPa to 3550 kPa). Examples of shaping and laminating different preforms are described in Heck, U.S. Patent 4,992,228 (February 12, 1991) and Flonc, U.S. Patent 5,080,851 (January 14, 1992).

Optionally, the lamination or molding step may be combined with step (1) in which the tackifier is adhered to the fibers. For instance, a powdered tackifier may be applied to substrates, and then the substrates may be heated and pressed in order to simultaneously adhere the tackifier to the substrates and laminate the substrates together in a preform.

The preform is contacted with a matrix resin that contains a second curable resin or resin composition. The matrix resins have the same description and preferred embodiments previously given for tackifiers, except that non-stoichiometric ratios of resin and hardener are seldom desirable. The matrix resin should be capable of reacting with the partially cured tackifier in the preform. The matrix resin should also be capable of dissolving the tackifier. Preferably, the quantity of matrix resin used in the composite is capable of dissolving the quantity of tackifier used in the composite under process temperatures. Preferably, the matrix resin can dissolve at least about 7 parts tackifier per 100 parts matrix resin (PPHR), more preferably at least about 10 PPHR, and most preferably at least about 15 PPHR. At about resin transfer molding temperatures, it preferably dissolves the tackifier in no more than about 30 minutes, more preferably in no more than about 20 minutes, and most preferably in no more than about 10 minutes.

The matrix resin is preferably chemically related to the tackifier, such as epoxy tackifiers with epoxy matrix resins or bismaleimide tackifiers with bismaleimide matrix resins. Preferably, at least about 50 percent of the backbone units in the tackifier and the matrix resin are the same; more preferably at least about 75 percent are the same; and most preferably essentially all are the same. Preferably, the curing agents and the ratio of curing agent to resin is about the same.

Most preferably, the matrix resin is essentially identical to the tackifier, so that the two resins cure to provide essentially equivalent cured polymers. For instance, the tackifier and the matrix resin:
(a) preferably contain essentially the same reactive sites, both in the resin and in the curing agent
   (if any);
(b) preferably have in common at least about 50 percent of backbone units that link the reactive sites, more preferably at least about 80 or 90 percent, and most preferably essentially all;
(c) preferably have weight average molecular weights that differ from each other by no more than about a 1:10 ratio, more preferably no more than about a 1:5 ratio and most preferably no more than a 1:3 ratio; and
(d) preferably have average equivalent weights that differ from each other by no more than a 1:10 ratio, more preferably no more than a 1:5 ratio and most preferably no more than a 1:3 ratio.

The quantity of matrix resin should be sufficient to hold the fibers together, to maintain fiber alignment and, preferably, to transfer loads around broken fibers. It is usually preferable to minimize the quantity of matrix resin in the composite. After curing, the matrix resin and tackifier usually make up at least about 20 volume percent of the composite and most often at least about 35 volume percent. It is preferably no more than about 80 volume percent of the composite, more preferably no more than about 50 volume percent and most preferably no more than about 40 volume percent.

The matrix resin is preferably applied under sufficient pressure to force it throughout the preform, so that voids within the cured composite are minimized. The matrix resin is preferably applied at pressures of about full vacuum (-14.7 psig or 0 kPa) to 600 psig (4239 kPa), and more preferably at 50 (446 kPa) to 400 psig (2860 kPa). The cured composite preferably contains no more than about 5 volume percent voids, and more preferably no more than about 2 volume percent.

The matrix resin and tackifier are then subjected to temperature and other conditions suitable to fully cure them. Again, the optimum time and temperature varies widely depending upon the matrix resin and tackifier used. When the matrix resin and tackifier are epoxy resins, then the final curing step is preferably at least 20 to 120 minutes at a temperature of at least 90°C to 180°C. When the matrix resin and tackifier are bismaleimide resins, then the final curing step is preferably at least 60 to 360 minutes at a temperature of at least 150°C to 210°C. The final curing step is preferably completed in a mold that can provide a composite of the desired shape. The pressure in the mold is preferably between -14.7 psig (0 kPa) and 500 psig (3550 kPa), and more preferably between 50 psig (446 kPa) and 400 psig (2860 kPa).

The resulting cured composite can be cooled, finished and used in the ordinary manner for matrix composites.

It is theorized, without intending to be bound, that the tackifier remains evenly dispersed across the substrate because it dissolves evenly during the second step prior to curing, rather than remaining in discrete lumps. Therefore, the flow of matrix resin through the mold does not significantly move the tackifier. The effectiveness of this procedure can readily be verified by labeling the tackifier with a chemical label that can quantitatively be detected using nondestructive methods. For instance, a small amount of brominated epoxy resin can be made a part of the tackifier. That resin can be quantitatively analyzed without destroying the resulting composite part by x-ray fluorescence. The concentration of tackifier preferably varies across the face of the substrate on average by no more than about 5 percent and more preferably by no more than about 1 percent.

When the tackifier and matrix resin are essentially identical, it is theorized that further advantages are realized. It is irrelevant whether the tackifier completely dissolves in the matrix. Both the tackifier and the matrix resin co-cure to leave indistinguishable cured resins. Therefore, the composite does not contain inhomogeneous zones.

### EXAMPLES

The following examples are for illustrative purposes only. They should not be taken as limiting the scope of either the specification or the claims. Unless otherwise stated all parts and percentages are by weight.

### Example 1 - Synthesis of Composite Using epoxy Matrix Resin and Preform That Contains Brominated Epoxy Resin Tackifier

Tackifier B was made by the following process: 500 g of the diglycidyl ether of brominated bisphenol A (commercially available as DER® 542 from The Dow Chemical Company) was heated under nitrogen purge to 110°C, with stirring from 60°C on. A 67 g quantity of tetrabromobisphenol A was added and dissolved. A 0.62 g quantity of ethyltriphenylphosphonium acetate-acetic acid complex was added dropwise. The temperature rises exothermically to about 140°C. The reaction temperature was maintained at 135°C to 140°C until an hour after the exotherm had subsided.

The solubility of Tackifier B was tested in a diglycidyl ether of bisphenol A that has an epoxy equivalent weight (EEW) of 176 to 183. (Resin A) Weighed samples of Tackifier B were placed in a beaker and heated to a desired temperature. Weighed samples of resin A, ground to a 100 mesh granule, were added to the beaker and stirred until a transparent solution was observed. The results are set out in Table 1-A.

**Table 1-A**

| Concentration (PPHR) | Temperature (°C) | Dissolution Time (min.) |
|---|---|---|
| 4 | 60 | 17 |
| 4 | 71 | 10 |
| 4 | 82 | 5 |
| 8 | 71 | 11 |

Tackifier B is cryogenically ground to 100 mesh fineness.

An eight ply preform was made made using Tackifier B. An even coat of ground tackifier was sprinkled on each of 8 plies of carbon fiber reinforcing fabric 203 mm by 203 mm (8 inches by 8 inches in dimension). The amount of tackifier was equal to about 5 percent of the weight of the fabric. The plies were placed in a 93°C circulating air oven for 1 minute to adhere the resin to the fabric. The plies were then stacked, heated at 93°C in a vacuum bag apparatus under 0 kPa (-14.7 psig) pressure for 30 minutes, and cooled to ambient temperature under reduced pressure. The resulting preform was about 0.15 inches (3.8 mm) thick.

The preform was placed in a mold and heated to 60°C. A mixture of 1100 g of resin A and 192.5 g diaminocyclohexane was injected into the mold at 60 psig (515 kPa) until the mixture was seen exiting from exit holes in the mold. The mold temperature was increased to 177°C at 2°C per minute and held at 177°C for 30 minutes to cure. The mold was cooled and the composite samples were recovered.

### Example 2 - Production of Composites Using Other Epoxy Tackifiers

The procedure in Example 1 was repeated using Tackifiers C and G. Tackifier C was made by reacting 356 g of diglycidyl ether of bisphenol A (having an EEW of 176 to 183) with 132 g of epoxy-grade bisphenol A using 0.57 g of ethyltriphenylphosphonium acetate:acetic acid complex catalyst.

Tackifier G was made by reacting:
(a) 64.2 parts bicyclopentadienyl epoxy novolac with an EEW of 215 to 235;
(b) 17.81 parts epoxy novolac with an EEW of 176 to 181;
(c) 15.5 parts tetrabromobisphenol A; and
(d) 2.5 parts sulfanillic acid curing agent
at 150°C for about 4 hours. The reaction product was broken into flakes and passed through an 85°C extruder at a rate of 12 x 10⁻³ kg/s (9.6 pounds per hour), along with 7.5 x 10⁻⁵ kg/s (0.6 pounds per hour) of an equimolar mixture of fluoroboric acid and tetra-n-butylphosphonium acetate:acetic acid complex.

The solubility of each Tackifier in resin A is set out in Table 2-A:

**Table 2-A**

| Concentration (PPHR) | Temperature (°C) | Dissolution Time for Tackifier C (min.) | Dissolution Time for Tackifier G (min.) |
|---|---|---|---|
| 4 | 60 | 33 | 24 |
| 4 | 71 | 16 | 16 |
| 4 | 82 | 9 | 10 |
| 8 | 71 | 24 | 17 |

Preforms and composites are made as described in Example 1. Composites are recovered.

### Example 3 - Production of Composites Using Bismaleimide Tackifier and Resin

Tackifier K was made by the following procedure: 1000 g of a bismaleimide resin formulation that is commercially available from BASF NARMCO as 5250-4-RTM (Resin J) was heated in an oven at 110°C for one hour. (The formulation is believed to contain 4,4'-bismaleimidodiphenylmethane; O,O'-diallylbisphenol A; 1,4-bismaleimido-2-methylbenzene). Stirring was commenced and the resin was heated with infrared lamps according to the profile in Table 3-A. The reaction was stopped and quenched when the viscosity of the resin at 150°C reached about 2000 cps.

**Table 3-A**

| Time (min.) | Temperature (°C) | Viscosity of Resin at 150°C (cps) |
|---|---|---|
| 0 | 78 | - |
| 10 | 99 | - |
| 20 | 125 | - |
| 30 | 140 | - |
| 40 | 140 | < 10 |
| 50 | 140 | ,30 |
| 60 | 140 | ,50 |
| 70 | 140 | 78 |
| 100 | 140 | 242 |
| 120 | 141 | 546 |
| 140 | 139 | 1021 |
| 147 | 141 | 1621 |
| 151 | 140 | 2173 |

The tackifier was ground to 100 mesh size. An 8-ply preform was made as described in Example 1. A composite was made as described in Example 1, except that the matrix resin was Resin J and the composite was cured at about 205°C.

### Example 4 - Production of Composites using Unsaturated Ester Tackifier and Resin

A preform was made as described in Example 1 using as a tackifier a pentaerythritol ester of tall oil resin that is commercially available from Union Camp Co. as UNI-TAC R100. The preform was placed in a mold at about room temperature, and DERAKANE™ 510C-350 (trademark of The Dow Chemical Company) vinyl ester resin was injected into the mold in a mixture with about 1 percent peroxide free radical initiator. The mold was heated to about 175°C for about 30 minutes and a composite article was made.

## Claims

1. A process to make a matrix composite comprising the steps of:
(1) contacting a reinforcing substrate with 0.25 to 15 weight percent of a curable, thermoplastic-like tackifier, which has a glass-transition temperature of at least 40°C, at a temperature above the glass-transition temperature of the tackifier but below the temperature at which the tackifier fully cures, so that the tackifier adheres to the substrate but remains thermoplastic and capable of further reaction, whereby a preform is made;
(2) placing one or more preforms from step (1) into a mold; and
(3) injecting a second curable resin or resin composition into the mold and curing the tackifier and second curable resin or resin composition together to form a matrix composite,
characterized in that:
(a) the tackifier is obtained by partially curing a first curable resin in the presence of a catalytic amount of curing catalyst and, if needed, a curing agent; and
(b) the first and second curable resins or resin compositions jar selected such that: (i) the second curable resin or resin composition can dissolve at least about 7 parts tackifier per 100 parts matrix resin, by weight, in no more than 30 minutes at curing temperature; or (ii) the tackifier and the second curable resin or resin composition contain essentially identical reactive sites, and their equivalent weights differ by no more than a 1:5 ratio.

2. The process as described in Claim 1 wherein the equivalent weights of the tackifier and the second curable resin or resin composition differ by no more than a 1:3 ratio.

3. The process as described in any of the preceding claims wherein the matrix selected can dissolve at least 10 PPHR tackifier in no more than 20 minutes under curing temperatures.

4. The process as described in any of the preceding Claims wherein the first curable resin is a resin that cures without the need for a separate curing agent.

5. The process as described in Claim 4 wherein the first curable resin is a bismaleimide resin.

6. The process as described in any of Claims 1-3 wherein the tackifier is obtained by partially curing a first curable resin and a curing agent, in the presence of a catalytic amount of curing catalyst.

7. The process as described in Claim 6 wherein the first curable resin is an epoxy resin and the hardener is a suitable curing agent.

8. The process as described in any of Claims 6 or 7, wherein the second curable resin or resin composition contains a curing agent which has reactive sites that are essentially identical to reactive sites on the curing agent used to make the tackifier.

9. The process as described in any of the preceding claims wherein the ratio of tackifier to substrate in the preform is between 1 and 8 weight percent.

10. The process as described in any of the preceding claims which further comprises the following step that is carried out between steps (1) and (2):
(1a) pressing two or more preforms together at a temperature above the glass transition temperature of the tackifier at a pressure and for a time sufficient to laminate the preforms together without fully curing the tackifier.

## Patentansprüche

1. Verfahren zur Herstellung eines Matrix-Verbundkörpers, umfassend die Stufen von:
(1) Inkontaktbringen eines verstärkenden Substrates mit 0,25 bis 15 Gew.-% eines aushärtbaren thermoplastisch-ähnlichen Klebrigmachers, der einen Einfrierbereich von wenigstens 40° C besitzt, bei einer Temperatur oberhalb des Einfrierbereiches des Klebrigmachers jedoch unterhalb der Temperatur, bei welcher der Klebrigmacher vollständig aushärtet, so daß der Klebrigmacher an dem Substrat haftet jedoch thermoplastisch und zur weiteren Reaktion fähig bleibt, wodurch ein Vorformling hergestellt wird;
(2) Anordnen von einem oder mehreren Vorformlingen von Stufe (1) in einer Form; und
(3) Einspritzen eines zweiten aushärtbaren Harzes oder einer zweiten aushärtbaren Harzzusammensetzung in die Form und gemeinsames Aushärten des Klebrigmachers und des zweiten aushärtbaren Harzes oder der zweiten aushärtbaren Harzzusammensetzung zur Bildung eines Matrix-Verbundkörpers,
dadurch gekennzeichnet, daß
(a) der Klebrigmacher durch partielles Aushärten eines ersten aushärtbaren Harzes in Anwesenheit einer katalytischen Menge eines Aushärtkatalysators und, falls erforderlich, eines Aushärtmittels erhalten worden ist; und
(b) die ersten und zweiten aushärtbaren Harze oder Harzzusammensetzungen derart ausgewählt sind, daß: (i) das zweite aushärtbare Harz oder die zweite aushärtbare Harzzusammensetzung wenigstens etwa 7 Teile Klebrigmacher pro 100 Teile Matrix-Harz, in Gewicht, in nicht mehr als 30 Minuten bei Aushärttemperatur auflösen kann; oder (ii) der Klebrigmacher und das zweite aushärtbare Harz oder die zweite aushärtbare Harzzusammensetzung im wesentlichen identische reaktive Plätze aufweisen und sich ihre Äquivalentgewichte um nicht mehr als ein 1:5-Verhältnis unterscheiden.

2. Verfahren nach Anspruch 1, worin die Äquivalentgewichte des Klebrigmachers und des zweiten aushärtbaren Harzes oder der zweiten aushärtbaren Harzzusammensetzung sich um nicht mehr mehr als ein 1:3-Verhältnis unterscheiden.

3. Verfahren nach einem der vorhergehenden Ansprüche, worin die ausgewählte Matrix wenigstens 10 PPHR (Teile pro 100 Teile Harz) Klebrigmacher in nicht mehr als 20 Minuten unter Aushärttemperaturen auflösen kann.

4. Verfahren nach einem der vorhergehenden Ansprüche, worin das erste aushärtbare Harz ein Harz ist, das ohne Notwendigkeit für eine getrenntes Aushärtmittel aushärtet.

5. Verfahren nach Anspruch 4, worin das erste aushärtbare Harz ein Bismaleinimidharz ist.

6. Verfahren nach einem der Ansprüche 1 - 3, worin der Klebrigmacher durch partielles Aushärten eines ersten aushärtbaren Harzes und eines Aushärtmittels in Anwesenheit einer katalytischen Menge eines Aushärtkatalysators erhalten worden ist.

7. Verfahren nach Anspruch 6, worin das erste aushärtbare Harz ein Epoxyharz ist und der Härter ein geeignetes Aushärtmittel ist.

8. Verfahren nach einem der Ansprüche 6 oder 7, worin das zweite aushärtbare Harz oder die zweite aushärtbare Harzzusammensetzung ein Aushärtmittel enthält, das reaktive Plätze besitzt, die im wesentlichen identisch mit reaktiven Plätzen auf dem zur Herstellung des Klebrigmachers verwendeten Aushärtmittel sind.

9. Verfahren nach einem der vorhergehenden Ansprüche, worin das Verhältnis von Klebrigmacher zu Substrat in dem Vorformling zwischen 1 und 8 Gew.-% beträgt.

10. Verfahren nach einem der vorhergehenden Ansprüche, welches weiterhin die folgende Stufe umfaßt, die zwischen den Stufen (1) und (2) durchgeführt wird:
(1a) Zusammenpressen von zwei oder mehr Vorformlingen bei einer Temperatur oberhalb des Einfrierbereiches des Klebrigmachers bei einem Druck und für eine Zeit, die ausreichen, um die Vorformlinge ohne vollständiges Aushärten des Klebrigmachers miteinander zu Laminieren.

## Revendications

1. Procédé de fabrication d'un composite à matrice, comprenant les étapes qui consistent à :
(1) mettre un substrat de renforcement en contact avec 0,25 à 15 % en poids d'un agent d'adhésivité ressemblant à un matériau thermoplastique, durcissable, qui présente une température de transition vitreuse d'au moins 40° C, à une température supérieure à la température de transition vitreuse de l'agent d'adhésivité mais inférieure à la température à laquelle l'agent d'adhésivité durcit complètement, de manière à ce que l'agent d'adhésivité adhère au substrat mais reste thermoplastique et capable de réagir encore, ce qui donne une préforme ;
(2) placer une ou plusieurs préformes provenant de l'étape (1) dans un moule ; et
(3) injecter une seconde composition résineuse ou résine durcissable dans le moule et à faire durcir l'agent d'adhésivité et la seconde composition résineuse ou résine durcissable ensemble pour former un composite à matrice,
caractérisé en ce que :
(a) on obtient l'agent d'adhésivité en faisant durcir partiellement une première résine durcissable en présence d'une quantité catalytique de catalyseur de durcissement, si nécessaire, d'un agent de durcissement ; et
(b) les première et seconde compositions résineuses ou résines durcissables sont choisies telles que : (i) la seconde composition résineuse ou résine durcissable puisse dissoudre au moins 7 parties environ d'agent d'adhésivité pour 100 parties de résine servant de matrice, en poids, en un laps de temps ne dépassant pas 30 minutes à une température de durcissement ; ou (ii) l'agent d'adhésivité et la seconde composition résineuse ou résine durcissable contiennent des sites réactifs principalement identiques, et présentent des poids d'équivalents différents dont le rapport ne dépasse pas 1:5.

2. Procédé conforme à la revendication 1, dans lequel les poids d'équivalents de l'agent d'adhésivité et de la seconde composition résineuse ou résine durcissable sont différents et dont le rapport ne dépasse pas 1:3.

3. Procédé conforme à l'une quelconque des précédentes revendications, dans lequel la matrice choisie peut dissoudre au moins 10 parties en poids d'agent d'adhésivité pour 100 parties en poids de résine servant de matrice, en un laps de temps ne dépassant pas 20 minutes aux températures de durcissement.

4. Procédé conforme à l'une quelconque des précédentes revendications, dans lequel la première résine durcissable est une résine qui durcit sans avoir besoin d'un agent de durcissement séparé.

5. Procédé conforme à la revendication 4, dans lequel la première résine durcissable est une résine de bismaléimide.

6. Procédé conforme à l'une quelconque des revendications 1 à 3, dans lequel on obtient l'agent d'adhésivité par durcissement partiel d'une première résine durcissable et d'un agent de durcissement, en présence d'une quantité catalytique de catalyseur de durcissement.

7. Procédé conforme à la revendication 6, dans lequel la première résine durcissable est une résine époxy et l'agent de durcissement est un agent de durcissement approprié.

8. Procédé conforme à l'une quelconque des revendications 6 ou 7, dans lequel la seconde composition résineuse ou résine durcissable contient un agent de durcissement qui présente des sites réactifs qui sont principalement identiques aux sites réactifs de l'agent de durcissement utilisé pour fabriquer l'agent d'adhésivité.

9. Procédé conforme à l'une quelconque des précédentes revendications, dans lequel le rapport de l'agent d'adhésivité au substrat dans la préforme est compris entre 1 et 8 % en poids.

10. Procédé conforme à l'une quelconque des précédentes revendications, qui comprend en outre l'étape suivante que l'on effectue entre les étapes (1) et (2) :
(1a) mise sous presse de deux ou plus de deux préformes ensemble à une température supérieure à la température de transition vitreuse de l'agent d'adhésivité sous une pression et pendant un laps de temps suffisants pour stratifier les préformes ensemble sans durcir complètement l'agent d'adhésivité.
